# FASCICULE DE BREVET EUROPEEN

(11) **EP 2 031 512 B1**
(45) Date de publication et mention de la délivrance du brevet: **21.11.2018**
(21) Numéro de dépôt: 08290774.2
(22) Date de dépôt: 14.08.2008
(51) Int. Cl.: G06F 9/50, G06F 9/46

(54) **Gestionnaire de processus amélioré**
Verbesserte Prozessverwaltung
Improved process manager

(30) Priorité: 31.08.2007 FR 0706119
(43) Date de publication de la demande: 04.03.2009
(73) Titulaire: Bull S.A.S., 78340 Les Clayes-sous-Bois (FR)
(72) Inventeur: Menyhart, Zoltan, 38240 Meylan (FR)
(74) Mandataire: Bonnet, Michel

(56) Documents cités:
- EP-A- 1 280 051
- GB-A- 2 153 118
- US-A- 5 365 606
- ARTSY Y ET AL: "Designing a process migration facility: the Charlotte experience" COMPUTER USA, vol. 22, no. 9, septembre 1989 (1989-09), pages 47-56, XP002471080 ISSN: 0018-9162
- DANIEL P. BOVET; MARCO CESATI: "Understanding the Linux Kernel, 3rd Edition" novembre 2005 (2005-11), O'REILLY , XP002471084 ISBN: 978-0-59-600565-8 *Chapter 19.3.5* *Chapter 20.1*
- WELDON R D ET AL: "Quantitative evaluation of the register stack engine and optimizations for future Itanium processors" PROCEEDINGS SIXTH ANNUAL WORKSHOP ON INTERACTION BETWEEN COMPILERS AND COMPUTER ARCHITECTURES IEEE COMPUT. SOC LOS ALAMITOS, CA, USA, 2002, pages 57-67, XP002471081 ISBN: 0-7695-1534-7
- BANGA G ET AL: "Resource containers: a new facility for resource management in server systems" OPERATING SYSTEMS REVIEW ACM USA, 1998, pages 45-58, XP002471082 ISSN: 0163-5980
- MIDORIKAWA H: "Meta process model: a new distributed shared memory programming model" PROCEEDINGS OF THE FIFTEENTH IASTED INTERNATION CONFERENCE ON PARALLEL AND DISTRIBUTED COMPUTING AND SYSTEMS ACTA PRESS ANAHEIM, CA, USA, vol. 1, 2003, pages 295-300 vol., XP002471083 ISBN: 0-88986-392-X

## Description

La présente invention concerne un gestionnaire de processus dans le cadre de l'exécution de processus liés à un programme informatique au sein d'un système d'exploitation.

Un processus informatique est un programme exécuté par un ordinateur, avec un espace d'adressage propre qui lui est rattaché.

Dans les systèmes d'exploitation modernes, l'espace d'adressage qui est associé à un processus donné est protégé, pour éviter qu'un autre processus (par exemple d'une autre application) vienne altérer ses données critiques. Cette protection est matérielle, c'est-à-dire que les processeurs comportent des registres matériels spécialisés pour chaque processus.

Cette protection matérielle pose néanmoins des problèmes de performances, dans le sens où certains processus doivent partager des données ou des services, mais ne le peuvent pas du fait de ce cloisonnement. Il est alors nécessaire de faire plusieurs copies des données à partager, ce qui est coûteux en termes de puissance et de temps.

Des solutions du type multi-fils (multi-threading) ont été développées pour permettre d'accélérer les performances d'exécution de processus, en profitant du fait que plusieurs processeurs étaient à dispostion. Cependant, ces solutions nécessitent une écriture particulière des applications, et ne sont donc pas compatibles avec les applications déjà existantes.

Il est également connu du document EP 1280051 une méthode de traitement dans l'environnement d'exécution JAVA permettant d'exécuter plusieurs applications JAVA sur une seule machine virtuelle JAVA. Pour ce faire, un module de contrôle active une seule machine virtuelle JAVA et génère un processus léger interne pour chaque application JAVA devant être exécutée.

Selon cette méthode, la quantité mémoire nécessaire à l'activation de la machine virtuelle Java et le temps de traitement du démarrage nécessaire au démarrage d'une nouvelle application Java sont réduits. Toutefois, cette solution présente une absence de protection entre les ressources.

L'invention vient améliorer la situation.

A cet effet, l'invention propose un gestionnaire de processus comprenant une mémoire de données de processus, et une unité de traitement de processus, capable de faire exécuter un code de processus en interaction avec une partie désignée de la mémoire de données de processus.

L'unité de traitement de processus est capable d'établir un super-processus associé à une partie désignée de la mémoire propre à loger des données d'un ou plusieurs processus, et est capable de faire exécuter le code de chacun de ces processus en interaction distincte avec leurs données.

Ce gestionnaire comprend également une fonction de mutualisation agencée pour loger des processus incidents dans un super-processus en réponse à une condition touchant au moins en partie à ces processus élémentaires incidents.

En outre, l'unité de traitement de processus est agencée pour loger des processus incidents dans un super-processus en réponse à une condition touchant au moins en partie au code de ces processus incidents.

Un tel gestionnaire de processus est particulièrement intéressant car il permet à des processus choisis d'être réunis comme sous-processus au sein d'un même processus partagé, et donc de pouvoir travailler sur un espace mémoire commun.

Dans des modes de réalisation particuliers, le gestionnaire présente les caractéristiques suivantes :
* la partie désignée de la mémoire d'un super-processus donné contient l'ensemble des données de processus de tous les processus qui lui sont associés ;
* la condition de logement des processus incidents touche à une liste reçue par le gestionnaire de processus qui associe un identifiant d'un processus incident à un identifiant d'un super-processus ;
* l'identifiant d'un processus incident est associé à un identifiant d'un super-processus en fonction au moins d'une partie du code du processus ;
* le gestionnaire de processus est implémenté sous la forme d'un démon ;
* le gestionnaire de processus est implémenté dans un système d'exploitation Linux ;
* les données de processus comportent une pile, un tas, un bloc BSS et un bloc de données ;
* les données de processus comportent en outre un bloc de moteur de registre associé avec la pile pour former une trame ;
* les données de processus comportent en outre des blocs de mémoire pour l'évolution du processus ; et
* l'unité de traitement est agencée pour implémenter une exécution multi-fils.

D'autres caractéristiques et avantages de l'invention apparaîtront mieux à la lecture de la description qui suit, donnée à titre illustratif et non limitatif sur la base d'exemples tirés des dessins sur lesquels :
- la figure 1 représente un espace de mémoire associé à un processus classique ;
- la figure 2 représente un gestionnaire de processus selon l'invention dans son environnement ;
- la figure 3 représente un espace d'adressage de mémoire associé à un super-processus par le gestionnaire de processus de la figure 2 ; et
- la figure 4 représente un diagramme de flux d'une exécution d'un processus.

Comme cela a été mentionné plus haut, pour être exécuté, un processus classique est stocké dans une mémoire (en général la mémoire RAM), dont les droits d'accès sont enregistrés dans un registre matériel du processeur.

Ce registre est protégé physiquement, c'est-à-dire que le processeur implémente des règles d'accès qui assurent que le processus associé à un espace de mémoire donné est le seul à pouvoir modifier cet espace.

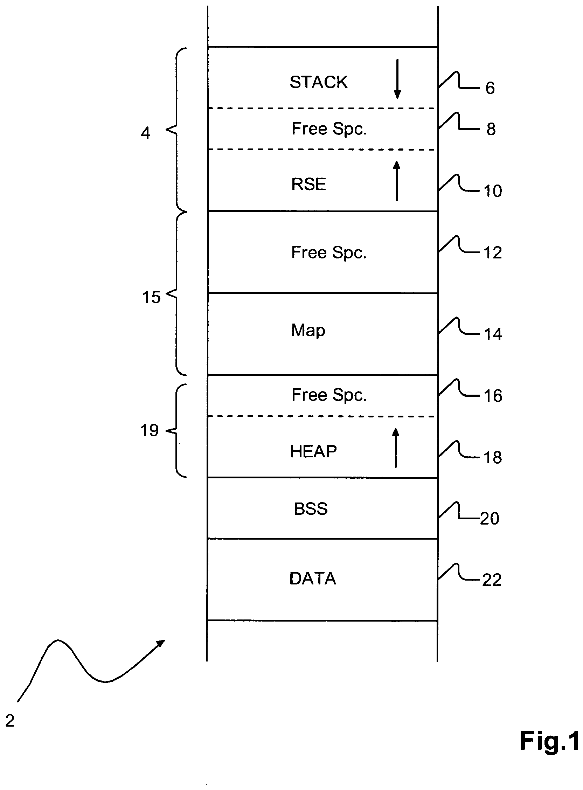

Dans les systèmes informatiques modernes, cet espace est appelé espace d'adressage, et est organisé comme représenté sur la figure 1.

Comme on peut le voir sur la figure 1, un espace d'adressage 2 comporte une succession de bits de mémoire qui sont associés à des blocs fonctionnels distincts.

L'espace d'adressage 2 comporte un bloc de trame 4 qui comporte une pile 6, un bloc 8 de mémoire libre, et un bloc de moteur de pile de registre 10 (RSE). Dans la trame 4, les flèches indiquent la direction d'empilement des données dans les blocs respectifs.

La pile 6 sert à empiler des données des fonctions au fur et a mesure quand une fonction appelle une autre, etc. Comme toute pile, elle fonctionne selon un principe FILO, c'est-à-dire que la première instruction introduite est la dernière à être récupérée. Cette pile permet donc de stocker les variables locales et d'exécuter séquentiellement les instructions du processus.

Le bloc 8 sert à offrir un espace d'extension à la pile 6 et le bloc de moteur 10, pour lui permettre de grandir dans le cas où sa taille viendrait à dépasser la taille qui lui est allouée à la création de l'espace d'adressage associé au processus.

Le bloc de moteur 10 est un élément optionnel qui est présent dans certaines architectures matérielles uniquement. Son rôle est de stocker le contenu des registres du processeur quand une fonction appelle une autre, etc. Le bloc 12 remplit le même rôle que le bloc 8, mais cette fois vis-à-vis du bloc de moteur 10.

Dès lors, le bloc de moteur 10 permet que, lorsqu'une première fonction appelle une deuxième fonction, la première fonction peut accéder rapidement à des données de cette deuxième fonction. Cette implémentation particulière est par exemple implémentée dans les processeurs Itanium (marque déposée).

En l'absence du bloc de moteur 10 et de l'architecture processeur correspondante, la première fonction doit accéder à la pile associée à la deuxième fonction, puis empiler ces données dans sa propre pile pour les manipuler.

D'autres utilisations peuvent être faites du bloc de moteur 10, notamment pour recevoir des données dynamiques dépendantes du processeur. Celui-ci peut également être totalement absent. Les données que stocke ce bloc sont les mêmes que les données pour les appels de fonction.

L'espace d'adressage 2 comporte ensuite un bloc 12 de mémoire libre et un bloc de mappage 14 formant un groupe de mappage 15. Le bloc 12 remplit le même rôle que le bloc 8, mais ici vis-à-vis du bloc de mappage 14.

Le bloc de mappage 14 sert à recevoir dans la mémoire de travail du processeur des données de la mémoire morte de l'ordinateur. Ce bloc de données est régulièrement synchronisé avec le fichier correspondant dans la mémoire morte, de sorte que tout changement apporté dans le bloc de mémoire de travail se reflète également sur le fichier correspondant.

A la suite du groupe de mappage 15, l'espace d'adressage 2 comporte un bloc 16 de mémoire libre et un tas 18 formant un groupe de tas 19. Le bloc 16 remplit le même rôle que le bloc 8, mais cette fois vis-à-vis du bloc de tas 18.

Le tas 18 est utilisé pour recevoir des données que le processus décide de créer, comme des variables globales par exemple. Par opposition à la pile 6, ce bloc de mémoire reste alloué même après la fin du processus, tant qu'il n'a pas reçu une instruction de libération.

Cela signifie que ce bloc de mémoire n'est pas accessible pour écrire d'autres données tant qu'il n'a pas été libéré, c'est-à-dire tant que la mémoire n'a pas reçue d'instruction indiquant que ce bloc n'est plus utilisé.

L'espace d'adressage 2 comporte un bloc BSS 20 à la suite du groupe de tas 19. Le bloc BSS 20 sert à recevoir des données qui sont initialisées à 0 au démarrage de l'exécution du processus.

Enfin, après le bloc BSS 20, l'espace d'adressage comporte un bloc de données 22. Le bloc de données 22 reçoit les données contextuelles d'exécution du processus, à partir du fichier exécutable.

On notera que ce qui précède représente un mode particulier de réalisation d'un espace d'adressage. Ainsi, certains blocs, comme le bloc de moteur 10 peuvent être omis, et d'autres peuvent avoir un rôle différent.

Par exemple on a ici présenté les blocs 8, 12, et 16 comme rattachés respectivement aux blocs 6 et 10, 14 et 18. Cependant, dans d'autres implémentations, ces blocs ne sont pas nécessairement rattachés à d'autres blocs. Ces blocs servent alors de mémoire libre que l'on peut remplir en fonction de l'évolution du processus, quelque soit le bloc d'origine.

Comme cela a été mentionné plus haut, il n'est pas possible de partager les données d'un processus avec un autre processus. En fait, le passage de données d'un processus à un autre nécessite deux opérations de copie des données à partager.

Une première opération de copie est nécessaire pour faire remonter ces données dans une ressource globale du système d'exploitation. Ensuite, une deuxième copie est nécessaire. Cette fois, le deuxième processus va chercher les données dans la ressource globale du système qui vient d'être créée, pour que celui-ci puisse manipuler les données partagées.

Cela est extrêmement coûteux en termes de performances, car les temps d'accès mémoire sont prohibitifs lorsque comparés à la vitesse du processeur.

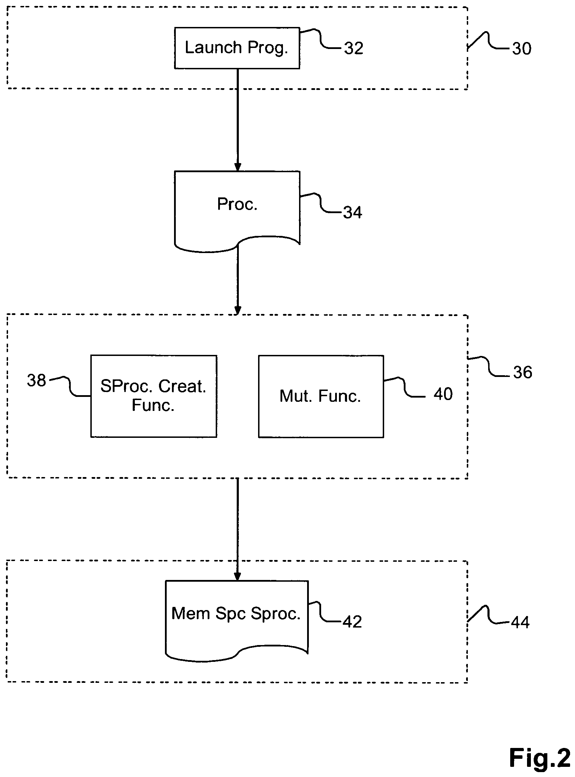

Le gestionnaire de processus représenté sur la figure 2 permet de contourner les protections physiques entre processus et offre ainsi la possibilité d'éviter les coûts d'accès mémoire inutiles.

Comme on peut le voir sur la figure 2, un système d'exploitation 30 comporte une application 32 pour faire exécuter les processus.

Le système d'exploitation 30 peut être de tout type, comme par exemple de la famille Windows (marque déposée), de la famille Unix (marque déposée) ou de la famille Linux (marque déposée) ou d'autre type similaire de système d'exploitation. Dans le cas de la famille Windows (marque déposée), l'application 32 est appelée "explorer", et dans le cas des familles Unix (marque déposée) et Linux (marque déposée), l'application 32 est appelée "shell".

Dans le mode de réalisation préféré de l'invention, ce sont le système d'exploitation Linux et son application "shell" qui sont utilisés.

Pour faire exécuter un processus 34 dans le cadre d'un système d'exploitation classique, l'application 32 appellerait des fonctions de chargement du système d'exploitation pour charger le processus 34 en mémoire pour son exécution.

Par charger, on entend l'ensemble des opérations nécessaires pour définir l'espace d'adressage associé à un processus donné, la définition correspondante des droits d'accès dans le processeur, et l'ordonnancement de l'exécution de ce processus parmi les processus à exécuter.

Dans le cadre de l'invention, l'application 32 appelle des fonctions de chargement distinctes. D'un point de vue fonctionnel, ces fonctions remplissent sensiblement le même rôle que les fonctions de chargement classique, mais en définissant les processus de manière différente, et en faisant appel à un gestionnaire de processus 36 dont le rôle va maintenant être expliqué.

Le gestionnaire de processus 36 est un composant logiciel ajouté dans le cadre de l'invention et qui n'existe pas dans les systèmes d'exploitation classiques. Les processus 34 qui sont traités par le gestionnaire de processus 36 seront qualifiés de processus incidents par la suite.

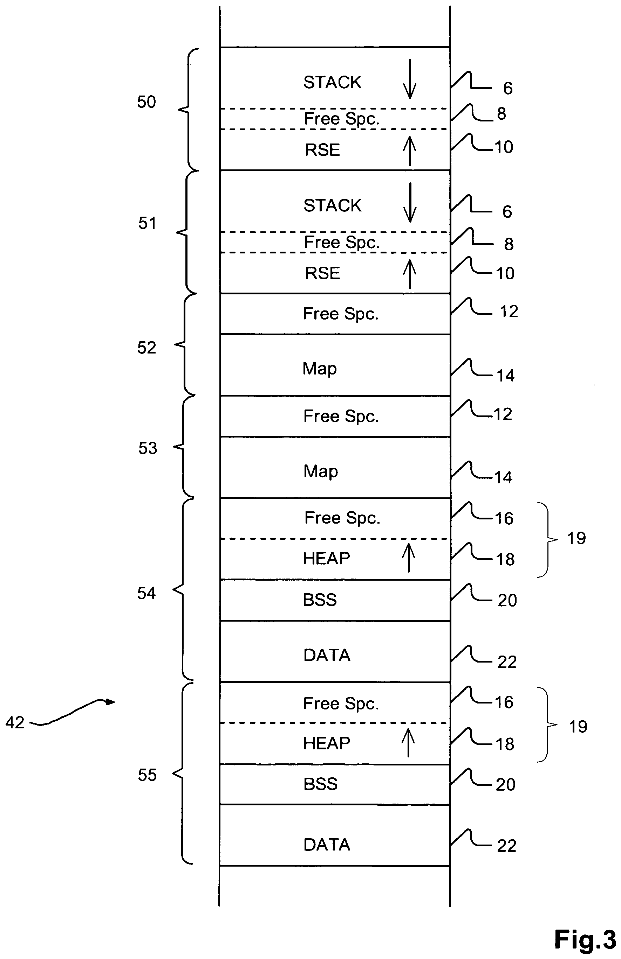

Ainsi, contrairement au cas classique dans lequel un espace d'adressage privé est alloué au processus 34, le gestionnaire 36 traite des processus incidents de manière sélective et commandée, en les associant avec un ou plusieurs autres processus incidents en cours d'exécution ou en attente, et en les chargeant tous ensemble dans un espace d'adressage qui sera décrit avec la figure 3.

Les processus chargés dans un même espace d'adresse peuvent ainsi partager des données auparavant privées, tout en conservant une partie de données propres, comme cela apparaîtra plus bas.

Dans le mode de réalisation décrit ici, le gestionnaire de processus 36 est un démon (daemon) qui reçoit des requêtes d'exécution des fonctions de chargement appelées par l'application 32, et qui assure lui-même le chargement de processus incidents dans des espaces d'adressage mutualisés.

Le gestionnaire de processus 36 comporte une unité de traitement 38 et une fonction de mutualisation 40.

L'unité de traitement 38 a pour fonction de créer des super-processus sur requête par les fonctions de chargement. Un super-processus est un processus dont l'espace d'adressage est agencé pour contenir les données de processus incidents qui lui sont associés.

Dans le cadre de leur association avec un super-processus, les processus incidents 34 sont qualifiés de processus élémentaires, car, bien que leurs données soient identiques aux processus incidents dont ils découlent, ils ne possèdent pas d'espace d'adressage privé associé comme dans le cas des systèmes d'exploitation classiques.

L'unité de traitement 38 a également pour rôle de faire exécuter le code des processus élémentaires associés aux super-processus. Cette unité peut également implémenter une exécution multi-fils des processus élémentaires.

La fonction de mutualisation 40 a pour rôle d'associer un processus incident 34 à un super-processus. Pour cela, la fonction de mutualisation doit charger un processus incident 34 dans l'espace d'adressage 42 du super-processus associé dans la mémoire vive (RAM) 44.

La fonction de mutualisation 40 ne décide pas de l'association entre un processus incident et un super-processus : ce sont les fonctions de chargement qui indiquent à quel super-processus un processus incident donné doit être associé.

Les super-processus sont des processus similaires aux processus 34, sauf en ce qui concerne leur espace d'adressage 42, qui va maintenant être décrit au moyen de la figure 3.

Comme on peut le voir sur la figure 3, il est représenté l'espace d'adressage 42 d'un super-processus auquel deux processus élémentaires sont associés.

L'espace d'adressage 42 comporte une trame pour chaque processus élémentaire, référencée respectivement 50 et 51. Les trames 50 et 51 sont similaires à la trame 6 de la figure 1, et comportent chacune une pile, un bloc de mémoire 8, et un moteur de pile de registre 10.

Les trames 50 et 51 sont suivies par des groupes de mappage 52 et 53 similaires au groupe de mappage 15 de la figure 1 et chacun associé à l'un des deux processus élémentaires. Les groupes de mappage 52 et 53 comportent chacun un bloc de mémoire 12 et un bloc de mappage 14.

A la suite des groupes de mappage 52 et 53, l'espace d'adressage 42 comporte deux structures 54 et 55 associées chacune à l'un des processus élémentaires, chaque structure comprenant :
- un groupe de tas similaire au groupe de tas 19 de la figure 1, qui comprend un bloc de mémoire 16 et un tas 18 ;
- un bloc BSS similaire au bloc BSS 20 de la figure 1 ; et
- un bloc de données similaire au bloc de données 22 de la figure 1.

Ainsi, l'espace d'adressage 42 comporte de manière effective l'ensemble des données des deux processus élémentaires. Au sein de cet espace d'adressage, chaque processus élémentaire possède un espace d'adressage qui lui est propre pour stocker les données globales, qui sont référencés 54 et 55 sur la figure 3.

Cela permet leur exécution via leur pile respective, tout en rendant possible le partage de données entre eux sans accès mémoire associé.

D'autre part, les données des processus élémentaires sont intégralement présentes de manière séparée. Cela assure que les processus possèdent un espace de mémoire propre dès leur chargement, sans qu'une application n'ait à ré-agencer leurs données.

Les processus peuvent ainsi s'exécuter en interaction distincte avec leurs données, tout en ayant un accès aux données des autres processus présents dans l'espace d'adressage qui évite le problème de double copie mentionné plus haut.

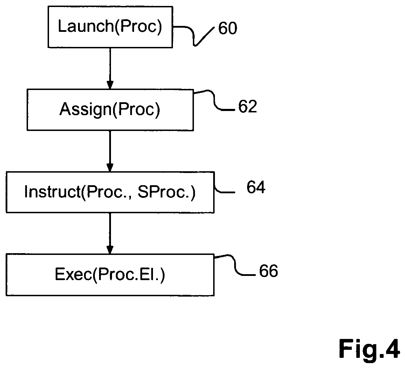

La figure 4 montre un diagramme de flux illustrant le traitement d'un processus donné, depuis le système d'exploitation jusqu'au processeur.

Dans un premier temps, l'application 32 lance une fonction Launch() avec comme argument un processus Proc dans une étape 60.

La fonction Launch() est une des fonctions de chargement implémentées dans le cadre de l'invention, et a pour rôle de récupérer les données du processus Proc dans des données Proc.Dat.

Ces données sont de deux natures fonctionnelles : des données d'exécution, c'est-à-dire le code à exécuter à proprement parler, et des données contextuelles, caractéristiques du contexte d'exécution du processus, comme les variables d'une fonction.

Lorsque les données du processus Proc sont récupérées, une fonction Assign() est appelée avec comme argument les données Proc.Dat dans une étape 62.

Cette fonction a pour rôle d'assigner le processus incident Proc à un super-processus existant, ou de créer un super-processus pour le recevoir. Le résultat de cette fonction est un couple (Proc.Dat., SProc) qui associe le processus incident à son super-processus.

Une fois la fonction Assign() terminée, une fonction Instruct() est appelée avec comme argument le couple (Proc.Dat., SProc.) dans une étape 64.

La fonction Instruct() a pour rôle de transmettre le couple processus incident/super-processus au gestionnaire de processus 36.

Dans le cadre de l'invention, la fonction Instruct() enregistre le couple (Proc.Dat., SProc.) dans une partie partagée de la mémoire du système d'exploitation qui est appelée Shared Memory (SHM), que le gestionnaire de processus 36 vient régulièrement consulter pour découvrir et traiter les nouveaux processus élémentaires à exécuter.

D'autres implémentations seraient possibles pour transmettre les processus incidents au gestionnaire de processus 36, par exemple par des communications de messages du type send / receive disponibles dans les systèmes d'exploitation.

Ensuite, le processus élémentaire est exécuté dans une étape 66, comme cela a été décrit précédemment, en appelant l'unité de traitement 38 pour créer un super-processus si cela est nécessaire, puis en appelant la fonction de mutualisation 40 pour charger le processus élémentaire dans l'espace d'adressage du super-processus.

Bien que les fonctions 60, 62 et 64 aient été décrite comme des fonctions distinctes, il serait possible de les réaliser différemment, en rassemblant deux d'entre elles, ou en les regroupant dans une unique fonction.

Bien que la présente invention ait été décrite en référence à des modes particuliers de réalisation, l'homme du métier saura envisager l'ensemble des réalisations particulières équivalentes qui rentrent dans la portée des revendications qui suivent.

L'invention couvre également, en tant que produits, les éléments logiciels décrits, mis à disposition sous tout "médium" (support) lisible par ordinateur. L'expression "médium lisible par ordinateur" comprend les supports de stockage de données, magnétiques, optiques et/ou électroniques, aussi bien qu'un support ou véhicule de transmission, comme un signal analogique ou numérique.

## Revendications

1. Gestionnaire de processus informatique, comprenant :
- une mémoire de données de processus (44), et
- une unité de traitement de processus (38), capable de faire exécuter un code de processus en interaction avec une partie désignée de la mémoire de données de processus,
l'unité de traitement de processus étant capable d'établir un super-processus associé à un espace d'adressage (42) désigné de la mémoire (44),
**caractérisé en ce qu'**il comprend en outre :
- une fonction de mutualisation (40) agencée pour charger des processus incidents (34) aptes à être exécutés chacun en tant que processus dans un espace d'adressage propre, dans l'espace d'adressage du super-processus en réponse à une condition touchant au moins en partie à ces processus incidents, de sorte que l'espace d'adressage du super-processus loge des données des processus incidents (34) en comportant pour chaque processus incident une trame (50, 51) suivie par un groupe de mappage (52, 53) et une structure (54, 55) pour stocker ses données,
et **en ce que** l'unité de traitement de processus (38) est capable de faire exécuter le code de chacun des processus incidents (34) en interaction distincte avec leurs données.

2. Gestionnaire de processus selon la revendication 1, **caractérisé en ce que** l'espace d'adressage du super-processus donné contient l'ensemble des données de processus de tous les processus incidents qui lui sont associés.

3. Gestionnaire de processus selon la revendication 1 ou 2, **caractérisé en ce que** la condition de logement des processus incidents touche à une liste reçue par le gestionnaire de processus qui associe un identifiant d'un processus incident à un identifiant d'un super-processus.

4. Gestionnaire de processus selon la revendication 3, **caractérisé en ce que** l'identifiant d'un processus incident est associé à un identifiant d'un super-processus en fonction au moins d'une partie du code du processus.

5. Gestionnaire de processus selon l'une des revendications précédentes, **caractérisé en ce qu'**il est implémenté sous la forme d'un démon (36).

6. Gestionnaire de processus selon l'une des revendications précédentes, **caractérisé en ce qu'**il est implémenté dans un système d'exploitation Linux.

7. Gestionnaire de processus selon l'une des revendications précédentes, **caractérisé en ce que** les données de processus comportent une pile (6), un tas (18), un bloc BSS (20) et un bloc de données (22).

8. Gestionnaire de processus selon la revendication 7, caractérisé en ce les données de processus comportent en outre un bloc de moteur de registre (10) associé avec la pile (6) pour former une trame (4).

9. Gestionnaire de processus selon la revendication 7 ou 8, caractérisé en ce les données de processus comportent en outre des blocs de mémoire (8, 12, 16) pour l'évolution du processus.

10. Gestionnaire de processus selon l'une des revendications précédentes, **caractérisé en ce que** l'unité de traitement (38) est agencée pour implémenter une exécution multi-fils des processus incidents logés dans un super-processus.

## Patentansprüche

1. IT-Prozessverwalter, umfassend:
- einen Prozessdatenspeicher (44), und
- eine Prozessverarbeitungseinheit (38), die in der Lage ist, unter Interaktion mit einem ausgewiesenen Teil des Prozessdatenspeichers einen Prozesscode ausführen zu lassen,
wobei die Prozessverarbeitungseinheit in der Lage ist, einen Superprozess festzulegen, der einem ausgewiesenen Adressraum (42) des Speichers (44) zugeordnet ist,
**dadurch gekennzeichnet, dass** er weiter umfasst:
- eine Bündelungsfunktion (40), die dafür eingerichtet ist, anstehenden Prozesse (34), die jeder als Prozess in einem eigenen Adressraum ausgeführt werden können, in Reaktion auf eine Bedingung, die mindestens einen Teil dieser anstehenden Prozesse betrifft, im Adressraum des Superprozesses zu laden, sodass der Adressraum des Superprozesses Daten der anstehenden Prozesse (34) aufnimmt, indem er für jeden anstehenden Prozess einen Frame (50, 51), gefolgt von einer Mapping-Gruppe (52, 53) und einer Struktur (54, 55), um seine Daten zu speichern, umfasst,
und dadurch, dass die Prozessverarbeitungseinheit (38) in der Lage ist, den Code von jedem der anstehenden Prozesse (34) unter getrennter Interaktion mit ihren Daten ausführen zu lassen.

2. Prozessverwalter nach Anspruch 1, **dadurch gekennzeichnet, dass** der Adressraum des gegebenen Superprozesses die Gesamtheit der Prozessdaten von allen den anstehenden Prozessen enthält, die ihm zugeordnet sind.

3. Prozessverwalter nach Anspruch 1 oder 2, **dadurch gekennzeichnet, dass** die Aufnahmebedingung der anstehenden Prozesse eine vom Prozessverwalter empfangene Liste betrifft, die eine Kennung eines anstehenden Prozesses einer Kennung eines Superprozesses zuordnet.

4. Prozessverwalter nach Anspruch 3, **dadurch gekennzeichnet, dass** die Kennung eines anstehenden Prozesses in Abhängigkeit von mindestens einem Teil des Codes des Prozesses einer Kennung eines Superprozesses zugeordnet wird.

5. Prozessverwalter nach einem der vorstehenden Ansprüche, **dadurch gekennzeichnet, dass** er in der Form eines Daemons (36) implementiert ist.

6. Prozessverwalter nach einem der vorstehenden Ansprüche, **dadurch gekennzeichnet, dass** er in einem Linux-Betriebssystem implementiert ist.

7. Prozessverwalter nach einem der vorstehenden Ansprüche, **dadurch gekennzeichnet, dass** die Prozessdaten einen Stack (6), einen Heap (18), einen BSS-Block (20) und einen Datenblock (22) umfassen.

8. Prozessverwalter nach Anspruch 7, **dadurch gekennzeichnet, dass** die Prozessdaten weiter einen Registry-Engine-Block (10) umfassen, der dem Stack (6) zugeordnet ist, um einen Frame (4) zu bilden.

9. Prozessverwalter nach Anspruch 7 oder 8, **dadurch gekennzeichnet, dass** die Prozessdaten weiter Speicherblöcke (8, 12, 16) für die Entwicklung des Prozesses umfassen.

10. Prozessverwalter nach einem der vorstehenden Ansprüche, **dadurch gekennzeichnet, dass** die Verarbeitungseinheit (38) dafür eingerichtet ist, eine Multi-Threading-Ausführung der in einem Superprozess aufgenommenen anstehenden Prozesse zu implementieren.

## Claims

1. Computer process manager, comprising:
- a process data memory (44), and
- a process processing unit (38), able to cause a process code to be executed in interaction with a designated part of the process data memory,
wherein the process processing unit is configured to establish a super-process associated with a designated address space (42) of the memory (44),
**characterized in that** it further comprises:
- a pooling function (40) organized to load incident processes (34) each able to be executed as a process in a proper address space, in the address space of the super-process in response to a condition affecting at least in part these incident processes, such that the address space of the super-process houses data of the incident processes (34) by including for each incident process a frame (50, 51) followed by a mapping group (52, 53) and a structure (54, 55) to store its data,
and **in that** the process processing unit (38) is able to cause the code of each of the incident processes (34) to be executed in separate interaction with their data.

2. Process manager according to claim 1, **characterized in that** the address space of the given super-process contains all the process data of all the incident processes that are associated with it.

3. Process manager according to claim 1, **characterized in that** the housing condition of the incident processes affects a list received by the process manager that associates an identifier of an incident process with an identifier of a super-process.

4. Process manager according to claim 3, **characterized in that** the identifier of an incident process is associated with an identifier of a super-process as a function of at least one part of the code of the process.

5. Process manager according to any of the preceding claims, **characterized in that** it is implemented in the form of a daemon (36).

6. Process manager according to any of the preceding claims, **characterized in that** it is implemented in a Linux operating system.

7. Process manager according to any of the preceding claims, **characterized in that** the process data comprise a stack (6), a heap (18), a BSS block (20) and a data block (22).

8. Process manager according to claim 7, **characterized in that** the process data further comprise a register engine block (10) associated with the stack (6) to form a frame (4).

9. Process manager according to claim 7 or 8, **characterized in that** the process data further comprise memory blocks (8, 12, 16) for the evolution of the process.

10. Process manager according to any of the preceding claims, **characterized in that** the processing unit (38) is organized to implement a multi-thread execution of the incident processes housed in a super-process.
